# EUROPÄISCHE PATENTSCHRIFT

(11) **EP 3 190 670 B1**
(45) Veröffentlichungstag und Bekanntmachung des Hinweises auf die Patenterteilung: **24.03.2021**
(21) Anmeldenummer: 16150439.4
(22) Anmeldetag: 07.01.2016
(51) Int. Cl.: H01R 13/52, H01R 13/533

(54) **LEITUNGSABDICHTUNG UND VIBRATIONSDÄMPFER**
CONDUIT SEAL AND VIBRATION DAMPER
ÉTANCHEITE DE CONDUITE ET AMORTISSEUR DE VIBRATIONS

(43) Veröffentlichungstag der Anmeldung: 12.07.2017
(73) Patentinhaber: Aptiv Technologies Limited, St. Michael (BB)
(72) Erfinder: URBANIAK, Andreas, 48153 Münster (DE); OSTHOFF, Hans Günter, 45549 Sprockhövel (DE); HAHN, Andreas, 42659 Solingen (DE); DIETSCH, Rüdiger, 42369 Wuppertal (DE)
(74) Vertreter: Manitz Finsterwald Patent- und Rechtsanwaltspartnerschaft mbB

(56) Entgegenhaltungen:
- EP-A1- 2 390 544
- EP-A1- 2 463 964
- EP-A2- 1 195 856
- WO-A1-2011/064628
- WO-A1-2014/060791
- DE-A1-102005 057 266
- US-A- 5 021 923
- US-A- 5 542 856
- US-A1- 2005 106 916
- Shin-Etsu Chemical Co. ET AL: "Characteristic properties of Silicone Rubber Compounds", , 28 May 2015 (2015-05-28), pages 1-16, XP055481360, Retrieved from the Internet: URL:https://web.archive.org/web/2015052821 1210if_/http://www.shinetsusilicone-global .com:80/catalog/pdf/rubber_e.pdf [retrieved on 2018-06-05]
- Antonios Argoudelis: "Comparison of vibration isolators with silicone to anti-vibration products made of natural rubber compounds", , 1 August 2014 (2014-08-01), XP055481616, Retrieved from the Internet: URL:http://antivibration-systems.com/vibra tion-isolators-silicon-vibration-control-r ubber/ [retrieved on 2018-06-06]
- Anonymous: "Silicone rubber - Wikipedia, the free encyclopedia", , 21 February 2014 (2014-02-21), pages 1-6, XP055192375, Internet Retrieved from the Internet: URL:http://en.wikipedia.org/w/index.php?ti tle=Silicone_rubber&oldid=596456058 [retrieved on 2015-05-29]

## Beschreibung

Die Erfindung betrifft ein Dichtungselement zum Abdichten von elektrischen Leitungen, die durch eine Gehäuseöffnung, von außerhalb in ein Gehäuse verlaufen. Das Dichtungselement dichtet dabei sowohl die hindurchgeführten elektrischen Leitungen, wie auch die Gehäuseöffnung gegen äußere Umwelteinflüsse. Die Erfindung dient auch zur Reduktion der Vibration der elektrischen Leitungen in einem Gehäuse. Sowie der haptischen Stabilisierung einer elektrischen Leitung beim manuellen Stecken in ein Gehäuse.

In der Automobilproduktion ist der Trend elektronische Module einzusetzen, um die vielfältigen Aufgaben der Sicherheit sowie Umweltschutz zu bewältigen, ungebrochen. Da trotz Einsatz von Bussystemen die Anzahl der Leitungen und Steckverbindungen stetig steigt, versucht man mit Miniaturisierung der Lage Herr zu werden und die Anzahl der Kabelsatzvarianten im Rahmen zu halten. Da die Verarbeitung miniaturisierter Stecksysteme jedoch problematisch ist und selbst eine moderate Ausfallrate nicht toleriert wird, muss die Entwicklung weitergehen. Ein Faktor zur Minderung von Ausfallraten ist die Vermeidung von Korrosion an elektrischen Kontakten. Dazu gehört auch das Abdichten von Steckergehäusen. Steckergehäuse werden mittlerweile sehr aufwendig gegen äußere Umwelteinflüsse wie Feuchtigkeit gedichtet. Ein in der Technik bekanntes Verfahren ist es einzelne elektrische Leitungen mit einer einzelnen Dichtung zu versehen. Eine andere Möglichkeit ist es eine Mattendichtung zu benutzen, um mehrere Leitungen gleichzeitig abzudichten. Dokument EP 2 463 964 A1 zeigt ein entsprechendes Dichtungselement. Diese Verfahren sind gut etabliert, zeigen aber Schwächen, wenn die Stecksysteme sehr klein werden. Bei kleiner werdenden Stecksystemen werden auch die Toleranzen, die eingehalten werden müssen, kleiner.

Weitere Probleme zeigen sich, wenn die Stecksysteme automatisch mit Kontaktteilen bestückt werden sollen. Die Kontaktelemente müssen, bei Mattengedichteten Stecksystemen, im Zusammenbau durch die Durchgangsöffnungen geschoben werden. Hier haben Fehlsteckungen fatale Folgen und erzeugen hohe Nachbearbeitungskosten. Die bei einigen Stecksystemen verwendeten Mattendichtungen neigen dazu sich zu verformen. Das geschieht, wenn der Stecker bestückt wird und die Kabeldurchmesser die Dichtungsöffnungen aufweiten. Hier kann es zu einem Lochversatz kommen, der die folgende Bestückung problematisch machen. Das Kontaktelement wird beim Stecken durch die nun verschobene Öffnung der Dichtung abgelenkt und kann nicht in die hintere Kontaktkammer gesteckt werden. Des Weiteren kann die Mattendichtung beschädigt werden. Ein weiteres Problem für die Mattendichtungen und andere Dichtungselemente sind die scharfen Kanten der Kontaktelemente und der Steckergehäuse. Diese lassen sich bei der Herstellung meist nicht vermeiden. Sie können in das Dichtungsmaterial schneiden und die Dichtung beschädigen. Zu guter Letzt spielt auch das Thema Vibration eine wachsende Rolle in der Fahrzeugtechnik. Neue Motorengenerationen verursachen Vibrationen in allen denkbaren Frequenzbereichen. Diese Vibrationen können unter Umständen die Lebenszeit von Fahrzeugkomponenten drastisch reduzieren.

Eine Beschreibung von Eigenschaften von Silicone Rubber ist auf Wikipedia einsehbar.

Die US 5 021 923 A offenbart einen Stromverteiler für Fahrzeuge.

Die EP 1 195 856 A2 betrifft eine herkömmliche wasserdichte Dichtringbaugruppe für einen Steckverbinder. Das Dokument EP 2 390 544 A1 betrifft ein Dichtungselement nach dem Oberbegriff des Anspruchs 1.

Die Aufgabe der Erfindung kann darin gesehen werden ein Dichtungselement bereitzustellen, das elektrische Leitungen, die in ein Gehäuse geführt werden, zuverlässig abdichtet und zusätzlich als Dämpfungselement wirkt. Das Dichtungselement sollte insbesondere den gestiegenen Anforderungen an Vibrationsbeständigkeit und Temperaturbeständigkeit standhalten.

Die Aufgabe wird durch den Gegenstand des Anspruchs 1 gelöst.

Das erfindungsgemäße Dichtungselement verfügt über zwei Teilelemente, die beide aus elastischem flexiblem Silikonmaterial bestehen. Wenn hier von Silikon oder Silikonmaterial die Rede ist, dann ist Flüssig-Silikon (Liquid Silicone Rubber (LSR)), wie es in der Industrie vielseitig eingesetzt wird gemeint. Durch unterschiedliche Materialmischungen können die Teilelemente mit verschiedenen Härten ausgestattet werden. Der hier verwendeten Begriffe "Härte" und "Shore-Härte" beziehen sich auf den, von dem US-Amerikaner Albert Shore 1915 entwickelten Werkstoffkennwert für Elastomere und Kunststoffe. Er ist in den Normen DIN EN ISO 868 und DIN ISO 7619-1 festgelegt. Da selbst bei größerer Shore-Härte des Silikons noch eine gewisse Flexibilität vorhanden ist, kann ein Stabilität erzeugendes Teilelement daraus hergestellt werden, welches immer noch flexibel genug ist eine elektrische Leitung dichtend zu umgeben und Vibrationen zu dämpfen. Gleichzeitig ist dieses Teilelement steif genug, um dem Dichtungselement einen formstabilen Körper zu geben, der eine gute Handhabung bei der Montage ermöglicht. Bei dem zweiten Teilelement, mit geringerer Shore-Härte, liegt der Fokus bei den Dichteigenschaften. Das zweite Teilelement wird auf das härtere erste Teilelement aufgebracht und kann dort dichten.

Das Dichtungselement kann mittels zweierlei Verfahren hergestellt werden. Beim Overmolding-Prozess, wird das erste Teilelement auf einer Standard Spritzgussmaschine gefertigt und danach zu einer zweiten Spritzgussmaschine überführt, wo es wieder eingelegt und das zweite Material darüber gespritzt wird.

Bei dem 2-Komponentenspritzgussverfahren findet das oben beschriebene Verfahren in nur einer speziellen Spritzgussmaschine statt und erfolgt ohne Unterbrechung. Die Maschine hat zwei Spritzaggregate und kann dadurch in einem Durchgang zwei verschiedene Materialien hintereinander verarbeiten. Die Position des ersten Teilelements kann im Werkzeug bei Bedarf verändert werden. Die verwendeten Werkzeuge werden auf den Verfahrensablauf adaptiert.

Gemäß der Erfindung sind das erste Teilelement und das zweite Teilelement unlösbar miteinander verbunden. Nach dem Aufbringen des zweiten Teilelements auf das erste Teilelement vernetzen die beiden Silikon-Materialien an den Verbindungsflächen. Die beiden Teile des Dichtungselementes sind dann unlösbar miteinander verbunden, wodurch die Teilelemente nicht verrutschen oder verloren gehen können.

Weiterhin weist das erste Teilelement eine größere Härte auf als das zweite Teilelement. Das erste Teilelement hat die Funktion ein tragendes Gerüst für das zweite Teilelement zu bilden Das erste Teilelement verleiht dem Dichtungselement weitgehend seine Dimensionen.

Vorteilhafte Ausbildungen der Erfindung sind den Unteransprüchen, der Beschreibung und den Zeichnungen zu entnehmen.

Gemäß einer weiteren Ausführungsform ist das Dichtungselement elastisch verformbar. Das Dichtungselement behält immer eine gewisse Flexibilität, wodurch es bei der Montage unempfindlich gegen biegen ist. Des Weiteren können Wände und Kanten des ersten Teilelements etwas nachgeben, um temporär Raum für verschobene Teile des zweiten Teilelements zu schaffen. Bei der Montage der elektrischen Leitung Das verhindert ein Abscheren des weichen zweiten Teilelements an scharfen Gehäusekannten.

Besonders bevorzugt ist die mindestens eine Durchgangsöffnung im ersten Teilelement und/oder im zweiten Teilelement eingebracht. Die Durchgangsgeometrie im Dichtungselement wird durch die Anforderungen an das Dichtungselement vorgegeben. Bei der Dimensionierung der Durchgangsgeometrie müssen die Materialeigenschaften berücksichtigt werden.

Gemäß einer weiteren Ausführungsform weist das zweite Teilelement ein Profil auf. Das Profil ist dort, wo das Dichtungselement an Flächen des Gehäuses angrenzt, angebracht. Dort dichtet das Profil, durch anschmiegen an die Kontaktfläche des Gehäuses. Das Profil kann in Form von Wellen, Dichtlippen, oder anderer bekannter Formen ausgeführt werden, um den Dichteffekt zu verbessern.

Besonders bevorzugt liegt die Härte des ersten Teilelements im Bereich zwischen 60 und 90 Shore-A und die Härte des zweiten Teilelements im Bereich zwischen 20 und 50 Shore-A. Kombinationen von Silikon mit Härten von z. B. 70 Shore-A mit 20 Shore-A aber auch 50 Shore-A mit 15 Shore-A führen zu einem guten Kompromiss aus Formstabilität und Dichtwirkung. Für besondere Anwendungen können jedoch auch andere Kombinationen gewählt werden.

Gemäß einer weiteren Ausführungsform ändert sich die Härte des Silikons entlang der Durchgangsöffnung. Dieser Aufbau bietet den Vorteil ein Dichtungselement bereitzustellen, welches mit einem ersten, härteren Teilelement fest in einer Gehäuseöffnung befestigt werden kann und die hindurchgeführte elektrische Leitung flexibel, jedoch knickgeschützt, aus dem Gehäuse leitet.

Besonders bevorzugt weist das erste Teilelement eine im Wesentlichen zylindrische Form auf. Diese Ausführungsform ist besonders geeignet für eine Einzeladerabdichtung. Die elektrische Leitung wird mit angebrachtem Dichtungselement, durch die Gehäuseöffnung, in das Gehäuse geschoben, wobei die elektrische Leitung, an einer vorgegebenen Position, vom ersten Teilelement, dichtend, umgeben ist. Das zweite Teilelement dichtet den verbleibenden Zwischenraum zwischen dem ersten Teilelement und der Gehäuseöffnung, wenn sich das Dichtungselement in der Gehäuseöffnung befindet. Die Durchgangsöffnung im ersten Teilelement kann, entlang des Verlaufs der Durchgangsöffnung, so ausgelegt werden, dass der Druck auf den Bereich, in dem das zweite Teilelement gegen die Gehäuseöffnung dichtet, erhöht wird. Wird die Öffnung im ersten Teilelement in diesem Bereich verengt, dann drückt die in die Durchgangsöffnung geschobene, elektrische Leitung das Material des zweiten Teilelements zusätzlich gegen die Innenfläche der Gehäuseöffnung. Wobei diese nur möglich ist, weil beide Teilelemente elastisch ausgeführt sind. Zusätzlich kann die Länge des ersten Teilelements so dimensioniert werden, dass ein Teil des ersten Teilelements aus der Gehäuseöffnung ragt, wenn das Dichtmittel montiert ist. Diese Ausführungsform dient einer besseren Handhabung bei der Montage. Das erste Teilelement wird so lang dimensioniert, dass der Werker es greifen kann und die, so verstärkte, Leitung besser handhaben kann. Dieses ist beim manuellen Stecken von dünnen Leitungen in Gehäuse sehr hilfreich.

Besonders bevorzugt ist das erste Teilelement gitterförmig aufgebaut Durch diese Ausführungsform können sehr flache Dichtungsgeometrien erreicht werden. Die Gitterstruktur des ersten Teilelements wirkt als Skelet für das zweite Teilelement. Dadurch werden weniger oder gar keine Haltevorrichtungen zum Halten des Dichtungselementes im Gehäuse benötigt. Es können bei Bedarf aber auch, auf die Längsachse der Leitung bezogen, längliche Dichtungselemente hergestellt werden. Die die Geometrie des ersten Teilelements bestimmt maßgeblich die Form des Dichtungselementes.

Gemäß einer weiteren Ausführungsform weist die Durchgangsöffnung im ersten Teilelement einen größeren Querschnitt als im zweiten Teilelement auf. Um beim Hindurchschieben des Kontaktelements durch das Dichtungselement weder das Kontaktelement noch das erste Teilelement zu beschädigen, ist der Querschnitt im ersten Teilelement größer. Das zweite Teilelement ist durch seine höhere Flexibilität in der Lage das Kontaktelement durch einen kleineren Querschnitt passieren zu lassen, wobei sich dieser Bereich stark ausdehnen kann.

Besonders bevorzugt ist ein Dichtungselement, das schichtförmig aufgebaut ist, wobei die erste Schicht durch das erste Teilelement und die zweite Schicht durch das zweite Teilelement gebildet wird. Dieser Aufbau erlaubt es, Mattendichtungen mit einer Vielzahl von Durchgangsöffnungen herzustellen. Diese Matten können später nach Bedarf geschnitten werden. Diese Art des Dichtungselementes läßt sich besonders leicht produzieren, weil hier nur ebene Flächen beschichtet werden müssen. Dieses ermöglicht den Gebrauch eines einfacheren Spritzwerkzeugs.

Gemäß einer weiteren Ausführungsform variiert der Querschnitt der Durchgangsöffnung entlang des Bereichs, in dem das Dichtungselement die elektrische Leitung umgibt. Dadurch wird es möglich, Bereiche mit unterschiedlichen Eigenschaften zu realisieren. Generell gelten bei flexiblen Dichtungselementen nachfolgende Regeln. Ein kleinerer Querschnitt kann die hindurchlaufende Leitung gut abdichten. Ein größerer Querschnitt reduziert die notwendige Einsteckkraft beim Hineinstecken des Kontaktelements, wobei der größere Querschnitt das Kontaktelement im Dichtmittel führt.

Gemäß einer weiteren Ausführungsform ist die Schichtdicke des zweiten Teilelements geringer als die Schichtdicke des ersten Teilelements. Dadurch bleibt die Dehnfähigkeit des zweiten Teilelements im Bereich der Durchgansöffnung gewährleistet. So können, bei geringen Schichtdicken sehr elastische Durchgangsöffnungen erzeugt werden.

Eine elektrische Verbindungsleitung umfasst eine elektrische Leitung mit einem, an einem Ende der elektrischen Leitung angebrachtem Kontaktelement, ein Gehäuse, das eine Gehäuseöffnung aufweist. Ein Dichtungselement, das die elektrische Leitung in der Gehäuseöffnung dichtend umgibt.

Nachfolgend wird die Erfindung anhand einer vorteilhaften Ausführungsform rein beispielhaft unter Bezugnahme auf die beigefügte Zeichnung beschrieben. Es zeigen:
- Fig. 1: zeigt einen gedichteten Stecker aus dem Stand der Technik.
- Fig. 2: zeigt eine erste Ausführungsform des Dichtungselementes.
- Fig. 3: zeigt eine Schnittdarstellung der ersten Ausführungsform des Dichtungselementes.
- Fig. 4: zeigt das erste Teilelement einer zweiten Ausführungsform des Dichtungselementes.
- Fig. 5: zeigt eine zweite Ausführungsform des Dichtungselementes.
- Fig. 6: zeigt eine Schnittdarstellung des Dichtungselementes nach der zweiten Ausführungsform.
- Fig. 7: zeigt eine Schnittdarstellung des Dichtungselementes nach einer dritten Ausführungsform.
- Fig. 8: zeigt eine perspektivische Ansicht des Dichtungselementes mit vorpositioniertem Kontaktelement.
- Fig. 9: zeigt eine perspektivische Ansicht des Dichtungselementes, wobei ein Kontaktelement das Dichtungselement passiert.
- Fig. 10: zeigt ein Gehäuse mit eingesetztem Dichtungselement in Schnittdarstellung.
- Fig. 11: zeigt ein Gehäuse mit eingesetztem Dichtungselement und eingeführter elektrischer Leitung in Schnittdarstellung.

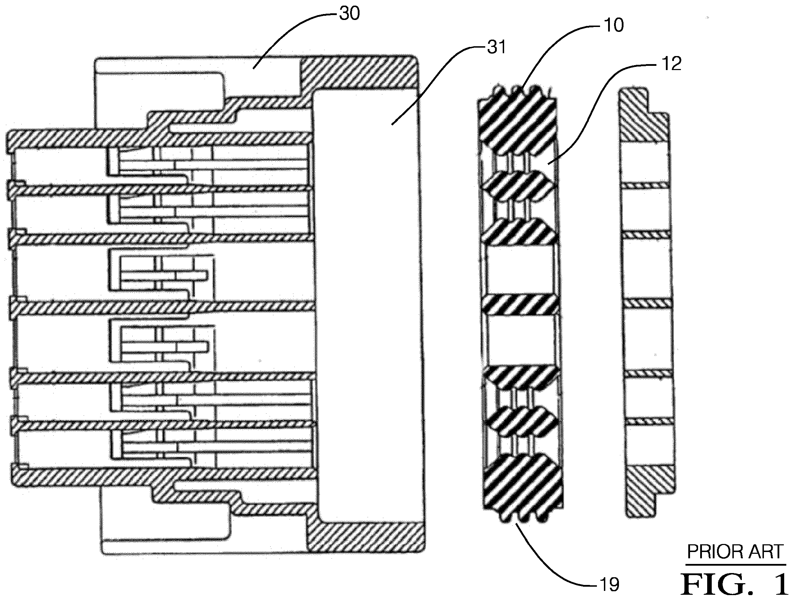

Figur 1 zeigt einen gedichteten Stecker aus dem Stand der Technik in Schnittdarstellung. Das Dichtungselement 10 ist hier noch nicht in die Gehäuseöffnung 31 des Steckergehäuses 30 eingesetzt. Das Dichtungselement 10 ist hier einstückig ausgebildet. Es weist ein Profil 19 am äußeren Umfang sowie in den Durchgangsöffnungen 12 auf.

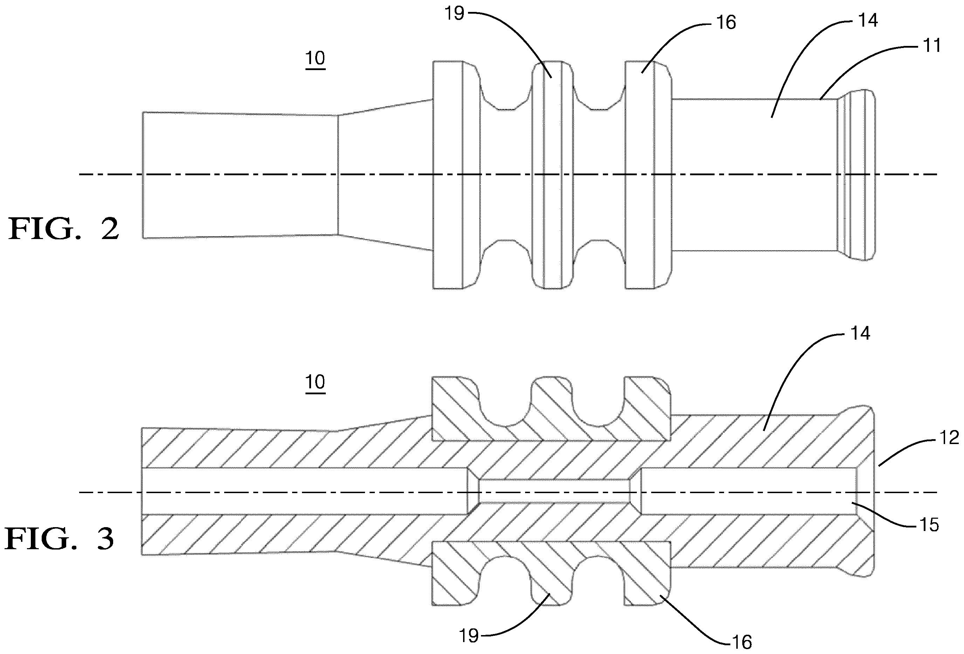

Figur 2 zeigt eine erste Ausführungsform des Dichtungselementes 10. Das Dichtungselement 10 weist ein erstes, zylinderförmiges Teilelement 14 auf. Ein zweites Teilelement 16 ist koaxial um das erste Teilelement 14 auf der Oberfläche 11 des ersten Teilelements 14 angebracht. Das zweite Teilelement 16 umgibt nur eine Teilstrecke entlang des zylindrischen, ersten Teilelements 14. Die Oberfläche des zweiten Teilelements weist ein Profil 19 auf.

Figur 3 zeigt eine Schnittdarstellung der ersten Ausführungsform des Dichtungselementes 10 aus Figur 2. Das erste Teilelement 14 des Dichtungselementes 10 weist eine Durchgangsöffnung 12 auf, die sich entlang des zylindrischen Körpers von einem Ende zum anderen Ende erstreckt. Die Durchgangsöffnung weist im mittleren Bereich eine Verengung auf. Das zweite Teilelement 16 umgibt hülsenförmig einen mittleren Bereich des ersten Teilelements 14.

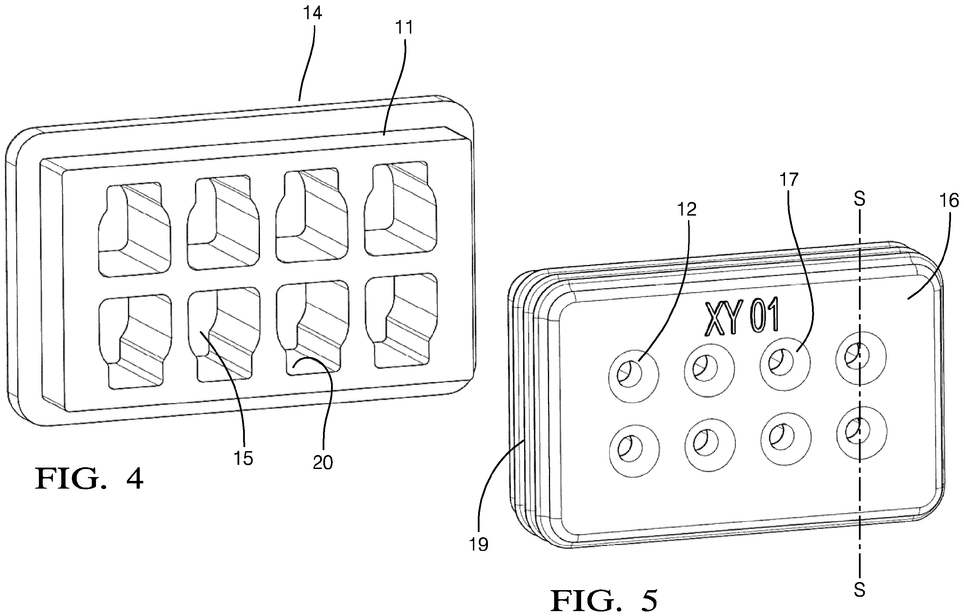

Figur 4 zeigt das erste Teilelement 14 einer zweiten Ausführungsform des Dichtungselementes 10 in perspektivische Darstellung. Bei dieser Ausführungsform kann das Dichtungselement 10 mehrere einzelne elektrische Leitungen 40 abdichten. Das erste Teilelement 14 hat eine im Wesentlichen quaderförmige Form sowie erste Öffnungen 15, durch die später die elektrischen Leitungen 40 gesteckt werden können. Bei dieser Darstellungsform sind mehrere erste Öffnungen 15 in Form einer Reihenanordnung im ersten Teilelement 14 eingebracht. Da das Teilelement 14 eine gewisse Materialstärke aufweist formen die ersten Öffnungen 15 Röhren 20 durch das erste Teilelement 14.

Figur 5 zeigt eine zweite Ausführungsform des Dichtungselementes 10 in perspektivischer Darstellung. Bei dieser Darstellung wurde auf das erste Teilelement 14 (Figur 4) das zweite Teilelement 16 aufgebracht. Das zweite Teilelement 16 überzieht hier alle, in Darstellung Figur 4 sichtbaren, Oberflächen 11 des ersten Teilelements 14, so dass nur noch das zweite Teilelement 16 sichtbar ist. Im zweiten Teilelement 16 befinden sich zweite Öffnungen 17, die mit den ersten Öffnungen 15 des ersten Teilelements 14 fluchten. Die zweiten Öffnungen 17 im zweiten Teilelement 16 sind deutlich kleiner als die ersten Öffnungen 15 im ersten Teilelement 14. Zusammen bilden sie die Durchgangsöffnung 12 durch das Dichtelement 10. Umlaufend um die schmale Kante des Quaders verläuft ein Profil 19, das das Dichtungselement zur Gehäuseöffnung 31 hin abdichtet.

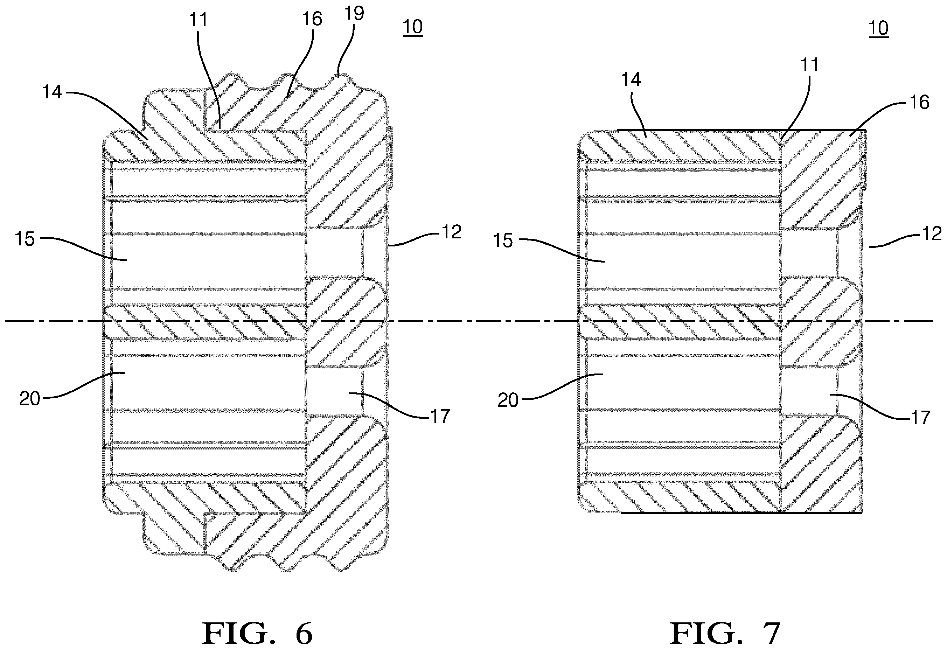

Figur 6 zeigt eine Schnittdarstellung des Dichtungselementes 10 nach der zweiten Ausführungsform (Figur 4, Figur5) entlang der Schnittkante S. Das erste Teilelement 14 ist vom zweiten Teilelement 16 teilweise bedeckt. Das zweite Teilelement 16 weist zweite Öffnungen 17 auf, die mit den ersten Öffnungen 15 des ersten Teilelements 14 fluchten und es dadurch ermöglichen , elektrische Leitungen 40 hindurch zu führen.

Figur 7 zeigt eine Schnittdarstellung des Dichtungselementes 10 nach einer dritten Ausführungsform. Bei dieser Ausführungsform ist das zweite Teilelement 16 nur auf einer Seite des quaderförmigen ersten Teilelements 14 aufgebracht.

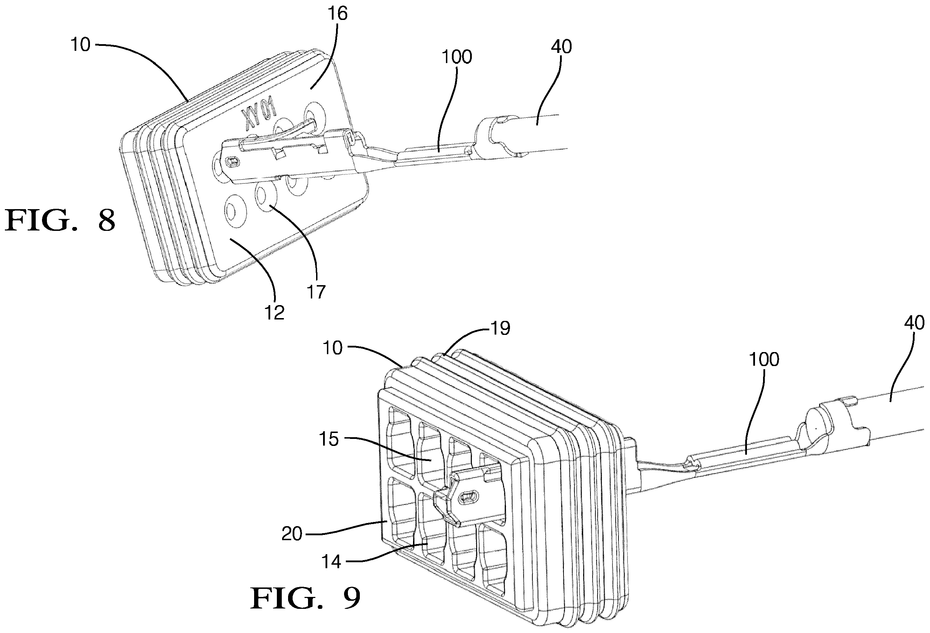

Figur 8 zeigt eine perspektivische Ansicht des Dichtungselementes 10 und ein, vor der Durchgangsöffnung 12 im Dichtungselement 10 positioniertem, Kontaktelement 41. In dieser Darstellung ist zu sehen, dass das Kontaktelement 41 einen deutlich größeren Durchmesser aufweist als die zweite Öffnung 17 im zweiten Teilelement 16.

Figur 9 zeigt eine perspektivische Ansicht des Dichtungselementes 10, wobei ein Kontaktelement 41 das Dichtungselement 10 passiert. Diese Ansicht zeigt die Seite des Dichtungselementes 10, bei der das erste Teilelement 14 nicht von dem zweiten Teilelement 16 bedeckt ist. Die ersten Öffnungen 15 im ersten Teilelement 14 sind deutlich größer als die zweiten Öffnungen 17 im zweiten Teilelement 16, wodurch sich temporär Material des zweiten Teilelements 16 in die erste Öffnung 15 des ersten Teilelements 14 verschieben kann. Die Röhrenform 20 der ersten Öffnungen 15 führt das Kontaktelement 41 beim Hindurchstecken durch das Dichtungselement 10.

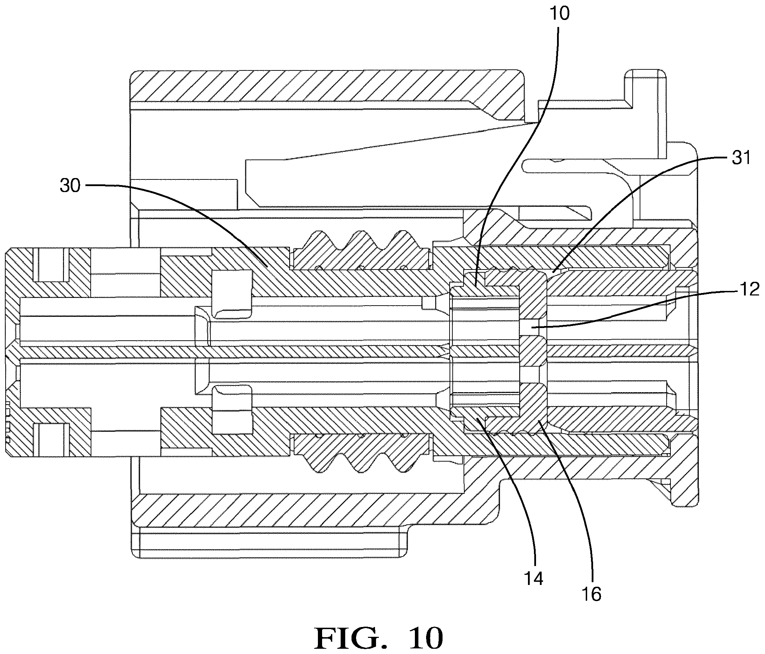

Figur 10 zeigt ein Gehäuse 30 mit eingesetztem Dichtungselement 10 in Schnittdarstellung. Das Dichtungselement 10 ist in der Gehäuseöffnung 31 positioniert. Das Profil 19 des zweiten Teilelements 16 dichtet gegen die Gehäuseöffnung 31. Die Durchgangsöffnung 12 im Dichtungselement 10 ist bereit, die Leitung 40 mit angebrachtem Kontaktelemente 41 passieren zu lassen und danach die Leitung 40 zu dichten.

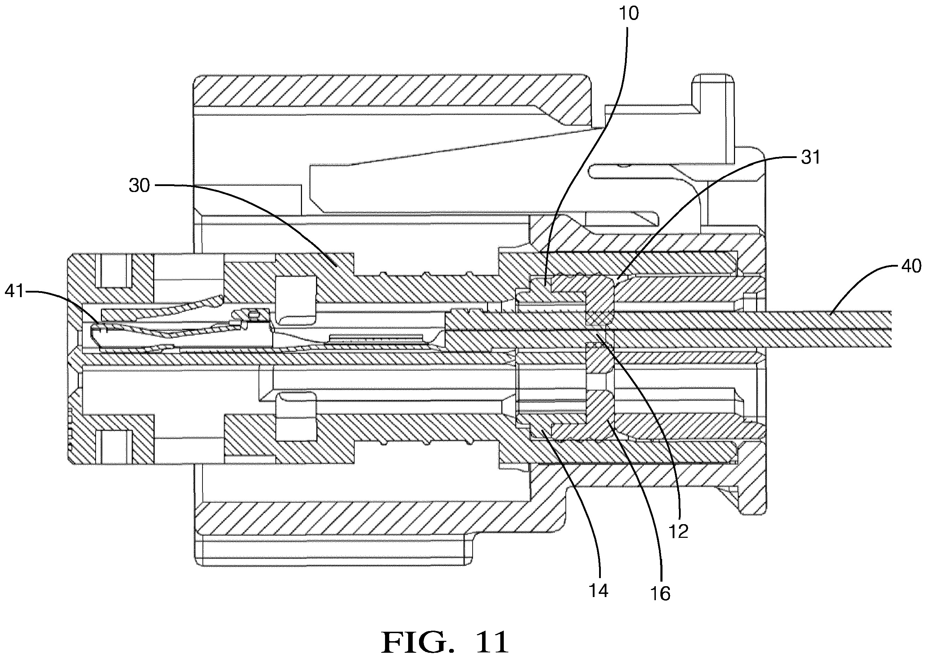

Figur 11 zeigt ein Gehäuse 30 mit eingesetztem Dichtungselement 10 und eingeführter elektrischer Leitung 40 in Schnittdarstellung. Das Kontaktelement 41 ist im Gehäuse 30 verrastet und die daran angebrachte elektrische Leitung 40 wird durch die Durchgangsöffnung 12 im Dichtungselement 10 nach außen geführt.

## Patentansprüche

1. Dichtungselement (10) zum Abdichten einer Gehäuseöffnung (31) in einem Gehäuse (30), wobei das Dichtungselement mindestens eine Durchgangsöffnung (12) zur Durchführung einer elektrischen Leitung (40) in das Gehäuse aufweist, das Dichtungselement wird aus einem ersten Teilelement (14) und einem zweiten Teilelement (16) gebildet, wobei das erste Teilelement (14) von dem zweiten Teilelement (16) zumindest teilweise bedeckt ist, wobei das erste Teilelement und das zweite Teilelement eine unterschiedliche Härte aufweisen, wobei das erste Teilelement (14) eine größere Härte aufweist als das zweite Teilelement (16), **dadurch gekennzeichnet dass** beide Teilelemente (14, 16) aus Silikon bestehen, wobei das erste Teilelement (14) und das zweite Teilelement (16) unlösbar miteinander verbunden sind.

2. Dichtungselement (10) nach Anspruch 1, **dadurch gekennzeichnet, dass** das Dichtungselement elastisch verformbar ist.

3. Dichtungselement (10) nach einem der vorhergehenden Ansprüche, **dadurch gekennzeichnet, dass** die mindestens eine Durchgangsöffnung (12) im ersten Teilelement (14) und/oder im zweiten Teilelement (16) eingebracht ist.

4. Dichtungselement (10) nach einem der vorhergehenden Ansprüche, **dadurch gekennzeichnet, dass** das zweite Teilelement (16) ein Profil (19) aufweist.

5. Dichtungselement (10) nach einem der vorhergehenden Ansprüche, **dadurch gekennzeichnet, dass** die Härte des ersten Teilelements (14) im Bereich zwischen 60 und 90 Shore-A liegt und die Härte des zweiten Teilelements (16) im Bereich zwischen 20 und 50 Shore-A liegt.

6. Dichtungselement (10) nach einem der vorhergehenden Ansprüche, **dadurch gekennzeichnet, dass** das erste Teilelement (14) eine zylindrische Form aufweist , wobei sich die Härte des Silikons entlang der Durchgangsöffnung (12) ändert.

7. Dichtungselement (10) nach einem der Ansprüche 1 bis 5, **dadurch gekennzeichnet, dass** das erste Teilelement (14) gitterförmig aufgebaut ist .

8. Dichtungselement (10) nach einem der Ansprüche 1 bis 5, **dadurch gekennzeichnet, dass** die Durchgangsöffnung (12) im erste Teilelement (14) einen größeren Querschnitt als im zweiten Teilelement (16) aufweist.

9. Dichtungselement (10) nach Anspruch 7 oder 8, **dadurch gekennzeichnet, dass** das Dichtungselement schichtförmig aufgebaut ist, wobei die erste Schicht durch das erste Teilelement (14) und die zweite Schicht durch das zweite Teilelement (16) gebildet wird.

10. Dichtungselement (10) nach einem der vorhergehenden Ansprüche, **dadurch gekennzeichnet, dass** der Querschnitt der Durchgangsöffnung (12) entlang des Bereichs, in dem das Dichtungselement die elektrische Leitung (40) umgibt, variiert.

11. Dichtungselement (10) nach Anspruch 8 oder 9, **dadurch gekennzeichnet, dass** die Schichtdicke des zweiten Teilelements (16) geringer als die Schichtdicke des ersten Teilelements (14) ist.

12. Elektrische Verbindungsleitung (100) umfassend eine elektrische Leitung (40) mit einem an einem Ende der elektrischen Leitung angebrachtem Kontaktelement (41), einem Gehäuse (30) aufweisend eine Gehäuseöffnung (31), und einem Dichtungselement nach Anspruch 1, das die elektrische Leitung in der Gehäuseöffnung dichtend umgibt.

## Claims

1. A sealing element (10) for sealing a housing opening (31) in a housing (30), wherein the sealing element has at least one passage opening (12) for the leading through of an electrical line (40) into the housing, the sealing element is formed by a first part element (14) and a second part element (16), wherein the first part element (14) is at least partly covered by the second part element (16), wherein the first part element and the second part element have a different hardness, wherein the first part element (14) has a greater hardness than the second part element (16), **characterized in that** both part elements (14, 16) are composed of silicone, with the first part element (14) and the second part element (16) being non-releasably connected to one another.

2. A sealing element (10) in accordance with claim 1, **characterized in that** the sealing element is elastically deformable.

3. A sealing element (10) in accordance with one of the preceding claims, **characterized in that** the at least one passage opening (12) is formed in the first part element (14) and/or in the second part element (16).

4. A sealing element (10) in accordance with any one of the preceding claims, **characterized in that** the second part element (16) has a profile (19).

5. A sealing element (10) in accordance with any one of the preceding claims, **characterized in that** the hardness of the first part element (14) is in the range between 60 and 90 Shore A and the hardness of the second part element (16) is in the range between 20 and 50 Shore A.

6. A sealing element (10) in accordance with any one of the preceding claims, **characterized in that** the first part element (14) has a cylindrical shape, with the hardness of the silicone changing along the passage opening (12).

7. A sealing element (10) in accordance with any one of the claims 1 to 5, **characterized in that** the first part element (14) has a grid-shaped design.

8. A sealing element (10) in accordance with any one of the claims 1 to 5, **characterized in that** the passage opening (12) has a larger cross-section in the first part element (14) than in the second part element (16).

9. A sealing element (10) in accordance with claim 7 or claim 8, **characterized in that** the sealing element has a layer-like design, with the first layer being formed by the first part element (14) and the second layer being formed by the second part element (16).

10. A sealing element (10) in accordance with any one of the preceding claims, **characterized in that** the cross-section of the passage opening (12) varies along the region in which the sealing element surrounds the electrical line (40).

11. A sealing element (10) in accordance with claim 8 or claim 9, **characterized in that** the layer thickness of the second part element (16) is smaller than the layer thickness of the first part element (14).

12. An electrical connection line (100) comprising an electrical line (40) which has a contact element (41) attached to one end of the electrical line, a housing (30) with a housing opening (31) and a sealing element in accordance with claim 1 which sealingly surrounds the electrical line in the housing opening.

## Revendications

1. Élément d'étanchéité (10) pour étancher une ouverture de boîtier (31) dans un boîtier (30), l'élément d'étanchéité présentant au moins une ouverture traversante (12) pour le passage d'une ligne électrique (40) dans le boîtier, dans lequel
l'élément d'étanchéité est formé d'un premier élément partiel (14) et d'un deuxième élément partiel (16),
le premier élément partiel (14) est au moins partiellement recouvert par le deuxième élément partiel (16),
le premier élément partiel et le deuxième élément partiel présentent une dureté différente, et
le premier élément partiel (14) présente une dureté supérieure à celle du deuxième élément partiel (16),
**caractérisé en ce que**
les deux éléments partiels (14, 16) sont constitués en silicone, le premier élément partiel (14) et le deuxième élément partiel (16) étant reliés entre eux de manière non détachable.

2. Élément d'étanchéité (10) selon la revendication 1,
**caractérisé en ce que**
l'élément d'étanchéité est élastiquement déformable.

3. Élément d'étanchéité (10) selon l'une des revendications précédentes,
**caractérisé en ce que**
ladite au moins une ouverture traversante (12) est ménagée dans le premier élément partiel (14) et/ou dans le deuxième élément partiel (16).

4. Élément d'étanchéité (10) selon l'une des revendications précédentes,
**caractérisé en ce que**
le deuxième élément partiel (16) présente un profil (19).

5. Élément d'étanchéité (10) selon l'une des revendications précédentes,
**caractérisé en ce que**
la dureté du premier élément partiel (14) est dans la plage entre 60 et 90 Shore A et la dureté du deuxième élément partiel (16) est dans la plage entre 20 et 50 Shore A.

6. Élément d'étanchéité (10) selon l'une des revendications précédentes,
**caractérisé en ce que**
le premier élément partiel (14) présente une forme cylindrique, la dureté du silicone variant le long de l'ouverture traversante (12).

7. Élément d'étanchéité (10) selon l'une des revendications 1 à 5,
**caractérisé en ce que**
le premier élément partiel (14) présente une structure en forme de grille.

8. Élément d'étanchéité (10) selon l'une des revendications 1 à 5,
**caractérisé en ce que**
l'ouverture traversante (12) dans le premier élément partiel (14) présente une section transversale plus grande que celle dans le deuxième élément partiel (16).

9. Élément d'étanchéité (10) selon la revendication 7 ou 8,
**caractérisé en ce que**
l'élément d'étanchéité présente une structure en couches, la première couche étant formée par le premier élément partiel (14) et la deuxième couche étant formée par le deuxième élément partiel (16).

10. Élément d'étanchéité (10) selon l'une des revendications précédentes,
**caractérisé en ce que**
la section transversale de l'ouverture traversante (12) varie le long de la zone dans laquelle l'élément d'étanchéité entoure la ligne électrique (40).

11. Élément d'étanchéité (10) selon la revendication 8 ou 9,
**caractérisé en ce que**
l'épaisseur de couche du deuxième élément partiel (16) est inférieure à l'épaisseur de couche du premier élément partiel (14).

12. Ligne de connexion électrique (100) comprenant une ligne électrique (40) ayant un élément de contact (41) fixé à une extrémité de la ligne électrique, un boîtier (30) ayant une ouverture de boîtier (31), un élément d'étanchéité selon la revendication 1 entourant de manière étanche la ligne électrique dans l'ouverture de boîtier.
